# EUROPÄISCHE PATENTANMELDUNG

(11) **EP 2 905 169 A2**
(43) Veröffentlichungstag der Anmeldung: **12.08.2015**
(21) Anmeldenummer: 15000396.0
(22) Anmeldetag: 11.02.2015
(51) Int. Cl.: B60L 11/18

(54) **Schließfachintegrierte Elektro-Ladestation**

(30) Priorität: 11.02.2014 DE 202014001252 U
(71) Anmelder: Boretius, Michael, 86152 Augsburg (DE)
(72) Erfinder: Boretius, Michael, 86152 Augsburg (DE)
(74) Vertreter: Gallo, Wolfgang

(57) **Zusammenfassung**

Elektro-Lade- oder Stromentnahmestation, mit einer Lade- oder Stromentnahmesteckdose (6) zum Einstecken des Steckers eines Lade- oder Stromentnahmekabels, wobei die Steckdose (6) innerhalb eines Schließfachs (1) mit einer Schließfachtür (2) angeordnet ist, die eine elektrisch gesteuerte Verriegelung aufweist und von einem Benutzer mittels einer Authentifizierung geöffnet werden kann, die mittels eines dem Schließfach (1) zugeordneten, am Schließfach oder an dessen Tür angeordneten Lese- oder Erfassungsgerät (7, 9, 10) erfaßbar ist, und wobei die Stromabgabe nach Einstecken des Steckers in die Steckdose (6) manuell oder automatisch auslösbar ist.

## Beschreibung

Die Erfindung betrifft eine schließfachintegrierte Elektro-Ladestation zum Laden beispielsweise von Fahrradbatterien, die von einem Benutzer unter Verwendung einer Authentifizierung zum Gebrauch zugänglich ist und eine benutzungsabhängige Abrechnung ermöglicht.

Ein wesentliches Hindernis für eine breitere Nutzung von Elektromobilität stellt die mangelnde Verfügbarkeit von Ladestationen dar. Insbesondere wegen der raschen Zunahme der Elektrofahrräder wäre eine flächendeckende Verbreitung jederzeit frei zugänglicher Akkuladestationen erwünscht. Gründe für die bisher mangelnde Verfügbarkeit von Ladestationen sind vor allem eine noch nicht zufriedenstellend gelöste Handhabung der Kostenabrechnung sowie der Schutz des Akkus mit Ladegerät vor Diebstahl während des Ladevorgangs.

Ladesäulen und Wandboxen sind, sofern diese in einem öffentlichen Bereich liegen, prinzipiell ungeeignet zum Laden eines aus dem Fahrrad entnehmbaren Zweiradakkus. Denn der Akku sowie auch das Ladegerät ist beim Ladevorgang an einer ungesicherten Ladesäule oder Wandbox diebstahlgefahrdet, wenn nicht besondere individuelle Maßnahmen zum Schutz getroffen werden, was nur sehr beschränkt überhaupt möglich wäre.

Ein bekannter Lösungsansatz für die Abrechnung findet sich in der DE 203 04 335 U1 des Anmelders. Dort wird eine Einrichtung zur ausweisgesteuerten Stromflußfreigabe vorgeschlagen, die eine Möglichkeit zur automatisierten nutzungsabhängigen Handhabung der Kostenabrechnung aufzeigt. Dort ist eine Steuerung vorgegeben, die durch einen Identifizierungsausweis des Benutzers, beispielsweise in Gestalt eines kodierten Chips, die Freischaltung der Stromabgabe ermöglicht, und die im Abgabestromkreis einen Sensors aufweist, der das Vorhandenseins eines Stromflusses mißt und den Stromabgabekreis automatisch wieder öffnet, wenn kein Stromfluß mehr stattfindet, weil entweder der Benutzer ein angeschlossenes Stromverbrauchsgerät abgeschaltet hat oder weil sich das Stromverbrauchsgerät selbsttätig abgeschaltet hat. Die Einrichtung kann so den tatsächlich erfolgten Stromverbrauch dem Benutzer zuordnen und abrechnen. Diese bekannte Einrichtung eignet sich beispielsweise für den Betrieb von Gemeinschaftswaschmaschinen oder Wäschetrocknern in Wohnanlagen, Maschinen auf Baustellen oder ähnliche Anwendungen.

Der hier in Rede stehenden Problematik der Bereitstellung praxistauglicher Ladestationen, die auch Sicherheit gegen Diebstahl bieten, kann die bekannte Einrichtung allerdings nicht abhelfen.

Der Erfindung liegt daher die Aufgabe zugrunde, eine als Elektro-Ladestation geeignete Einrichtung zu schaffen, die einen automatischen, vom Benutzer äußerst einfach auslösbaren Betrieb ermöglicht und gleichzeitig Batterien oder Geräte während des Ladevorgangs gegen Diebstahl sichert.

Diese Aufgabe wird gemäß der Erfindung durch die im Anspruch 1 angeordnete Anordnung einer schließfachintegrierten, vom Benutzer mittels einer Authentifizierung auslösbaren Elektro-Ladestation gelöst. Vorteilhafte Ausgestaltungen der Erfindung sind Gegenstand der Unteransprüche.

Die erfindungsgemäße Einrichtung bildet also eine schließfachintegrierte Elektro-Ladestation, die wie ein Schließfach ausgebildet ist, in deren Innerem sich der Elektro-Ladeanschluß befindet, und dessen Innenraum zur Aufnahme der aufzuladenden Batterie, beispielsweise einer Fahrradbatterie, oder eines anderen aufzuladenden Geräts, beispielsweise eine Laptops, dient. Während des Ladevorgang ist das Schließfach geschlossen, so dass das Innere unzugänglich ist und eine darin befindliche Batterie oder ein darin befindliches Gerät gegen Diebstahl gesichert ist. Das Öffnen des Schließfachs erfolgt von einem Benutzer unter Verwendung einer Authentifizierung, wonach der Benutzer das zu ladende Gerät oder den zu ladenden Akku in das Schließfach einlegen und das Ladekabel in einen innerhalb des Schließfachs befindlichen Ladestecker einstecken kann. Auch das Wiederöffnen des Schließfachs nach abgeschlossenem Ladevorgang erfolgt mittels der Authentifizierung durch den Benutzer.

Die Schließfachtür kann vorzugsweise im Bereich ihres unteren Randbereichs eine Kabeldurchführungsöffnung aufweisen, die durch eine von der Randkante aus etwas in die Türfläche vorspringende Aussparung gebildet sein kann, um statt des Einlegens eines zu ladenden Geräts ein Ladekabel zu einem außerhalb des Schließfachs befindlichen Gerät, beispielsweise einem im Fahrrad eingebauten Akku, der nicht ausgebaut zu werden braucht, durchführen zu können. Das Fahrrad kann dabei durch ein Schloß gegen Diebstahl gesichert sein, während das Ladekabel mit dem innerhalb des Schließfachs befindlichen Ladestecker durch das Schließfach selbst gegen Diebstahl gesichert ist.

Die Authentifizierung des Benutzers zum Gebrauch der schließfachintegrierten ElektroLadestation kann beispielweise über einen kodierten Chip oder eine Chipkarte erfolgen, der bzw. die an einen entsprechenden, dem Schließfach zugeordneten Sensor an der Schließfachtür oder an einem angrenzenden Bereich des Schließfachs gehalten werden kann, oder sie kann beispielsweise auch über ein Handy gesendet werden. Der Benutzer identifiziert sich dabei durch seine Authentifizierung, so dass eine Zuordnung des Stromverbrauchs oder der Benutzung zum jeweiligen Benutzer und eine ihm zugeordnete Abrechnung möglich ist. Dabei kann auch vorgesehen sein, dass ein nur zeitweiliger Benutzer einen Chip oder eine Chipkarte vorübergehend beispielsweise in einem benachbarten Ladengeschäft erwirbt, um die Ladestation einmalig nutzen zu können.

Es versteht sich, dass die erfindungsgemäße Einrichtung dafür konzipiert ist, dass in einem gemeinsamen Gehäuse eine Mehrzahl solcher schließfachintegrierter Elektro-Ladestationen vorgesehen sind, so dass die Benutzung mehreren Benutzern gleichzeitig möglich ist. Insbesondere ist auch vorgesehen, eine Mehrzahl von Schließfachmodulen nach Belieben und nach örtlichen Verhältnissen nebeneinander oder übereinander zu einem modularen Block zusammenzubauen, dem ein gemeinsames Steuergerät zugeordnet sein kann, das den Betrieb aller Schließfächer steuert.

Die Funktion kann zweckmäßigerweise derart konzipiert sein, dass nach dem Öffnen der Schließfachtür durch den Benutzer unter Verwendung seiner Authentifizierung der Benutzer das Gerät einlegt, das Ladekabel in eine innerhalb des Schließfachs befindliche Steckdose einsteckt oder ein Kabel, das durch die Schließfachtür nach außen geführt ist, im Inneren des Schließfachs einsteckt, und der Abgabestromkreis beim Schließen der Tür automatisch geöffnet wird. Alternativ kann auch vorgesehen sein, daß der Betrieb, also die Stomabgabe, durch eine nochmalige Authentifizierung, entweder über den außen am Schließfach oder dessen Tür angeordneten Sensor, oder über einen zweiten, innen angeordneten Sensor, oder durch Drücken einer innen befindlichen Starttaste gestartet wird.

Die Abrechnung eines Entgelts kann entweder zeitabhängig nach der Benutzungszeit des Schließfachs oder stromverbrauchsabhängig erfolgen. Im letzteren Fall kann, analog der oben beschriebenen bekannten Einrichtung, der Abgabestromkreis mit einem Fühler ausgestattet sein, der den Stromfluß im Abgabestromkreis mißt, und der beim Absinken des Stromflusses unter eine Minimalschwelle, also bei vollständig geladener Batterie, den Stromfluß automatisch unterbricht, unabhängig vom späteren Zeitpunkt der Herausnahme der Batterie oder des Geräts aus dem Schließfach.

Das Schließfach ist zweckmäßigerweise so konzipiert, dass das Öffnen nur durch die genannten Möglichkeiten der Authentifizierung des Benutzers möglich ist, und dass das Verriegeln der Tür im geschlossenen Zustand automatisch erfolgt, entweder generell, sobald die Tür geschlossen ist, oder spätestens nach dem Start der Stromabgabe bei geschlossener Tür. Vorteilhaft ist dabei allerdings die erstere Möglichkeit, dass die Tür beim Schließen automatisch sofort verriegelt wird und ein wieder Öffnen nur mittels der Authentifizierung des Benutzers möglich ist. Dadurch wird verhindert, dass durch Vandalismus oder Unfug Schaden im Inneren des Schließfachs angerichtet werden kann. Die Authentifizierung beispielsweise mittels eines kodierten Chips, einer Chipkarte oder dgl. oder per Funk über Handy macht auch ein Schlüsselloch oder dgl. an der Schließfachtür entbehrlich, so dass auch diesbezüglich keine Betriebsstörung etwa durch Verkleben eines Schlüssellochs mit einem Kaugummi auftreten kann.

Weil das Betätigen des Schließfachs durch den Benutzer erfolgen kann, indem lediglich ein Chip oder eine Chipkarte an einen Sensorbereich an oder neben der Schließfachtür gehalten wird oder ein Handysignal gesendet wird, um die Schließfachtür zu öffnen und das Gerät einlegen und den Ladestecker einstecken zu können, und weil der Betriebsstart automatisch beim Schließen der Tür ausgelöst werden kann, bedarf es nur einer einzigen Handlung durch den Benutzer zum anfänglichen Öffnen der Tür und auch zum Wiederöffnen der Tür nach Abschluß des Ladevorgangs, um die schließfachintegrierte Ladestation zu nutzen, womit auch die Notwendigkeit einer womöglich mehrsprachigen Benutzerführung über ein Bedienungspaneel oder einen Bildschirm entbehrlich ist. Dadurch kann das erfindungsgemäße System extrem nutzungsfreundlich, gegen äußere Einwirkungen und Wirkungen unempfindlich und robust ausgebildet werden.

Es versteht sich auch, dass ein Schließfachmodulblock auch mobil ausgebildet werden kann, um beispielsweise nur zu bestimmten Zeiten im öffentlichen Bereich aufgestellt zu werden, beispielsweise während der Öffnungszeiten eines Ausflugslokals.

Ausführungsbeispiele der Erfindung werden nachstehend unter Bezugnahme auf die anliegenden schematischen Zeichnungen kurz beschrieben, in denen zeigen:
- Die Fig. 1 und 2: zwei Varianten eines schließfachintegrierten Elektro-Ladestation-Moduls bei geöffneter Schließfachtür,
- die Fig. 3 und 4: die Ausführungsbeispiele nach den Fig. 1 und 2 bei geschlossener Schließfachtür,
- die Fig. 5 und 6: Beispiele von horizontal oder vertikal aneinandergereihten Ladestation-Modulen, und
- Fig. 7: ein schematisches Schaltbild.

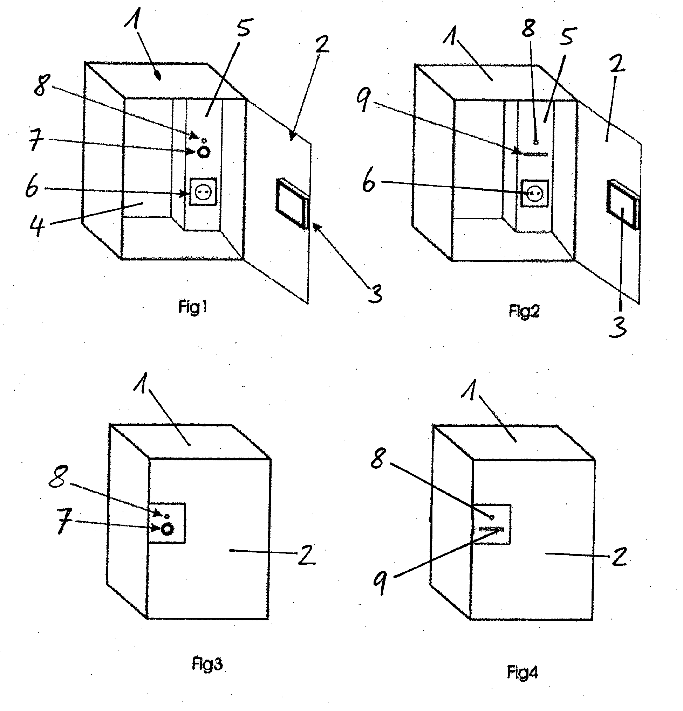

Die Fig. 1 bis 4 zeigen jeweils in schematischer perspektivischer Darstellung zwei ähnliche Ausführungsbeispiele einer schließfachintegrierten Elektro-Ladestation, jeweils mit geöffneter und geschlossener Schließfachtür.

Fig. 1 zeigt das geöffnete Schließfach 1 mit geöffneter Schließfachtür 2, die mit einem elektrischen Schloß 3 zum Verriegeln der Schließfachtür 2 im geschlossenen Zustand versehen ist.

Im Inneren des Schließfachs 1 ist ein ausreichend großer freier Raum 4 zum Einlegen einer zu ladenden Batterie oder eines anderen zu ladenden Geräts vorgesehen, und außerdem befindet sich im Inneren des Schließfachs ein Technikblock 5, der hier auch nur schematisch und beispielhaft dargestellt ist. Er könnte auch so gestaltet sein, dass das kubische Innere des Schließfachs einfach durch eine durchgehende Wand in einen Aufnahmeraum für den zu ladenden Akku oder das zu ladende Gerät und einen davon getrennten technischen Bereich unterteilt ist.

Der Technikblock 5 weist eine Ladesteckdose 6 auf, in die ein Ladestecker einsteckbar ist.

Das Ausführungsbeispiel nach Fig. 2 ist in gleicher Weise aufgebaut.

Die Fig. 3 und 4 zeigen die beiden Varianten nach den Fig. 1 und 2 bei geschlossener Schließfachtür 2, so dass in diesen Figuren die Außenseite der Schließfachtür 2 sichtbar ist.

In Fig. 3 ist außen an der Schließfachtür ein Chiplesesensor 7 sichtbar, der in der praktischen Ausführung natürlich so flächenbündig in die Türfläche eingesetzt ist, dass äußerlich nur ein beispielsweise farbig angelegtes Feld optisch markiert ist, an welches ein kodierter Authentifizierungschip anzulegen ist. Außerdem kann eine elektrische Anzeige 8 vorgesehen sein, beispielsweise eine LED, um den Betriebszustand der Ladestation anzuzeigen. Diese LED kann beispielsweise leuchten oder blinken, solange der Ladevorgang stattfindet, so dass äußerlich sichtbar ist, ob noch ein Ladestromfluß zu einem im Schließfach befindlichen Gerät stattfindet, oder ob der Aufladung schon abgeschlossen ist.

Die Anzeige 8 kann auch den Belegungszustand anzeigen, also ob das Schließfach frei oder belegt ist. Beispielweise kann durch grünes Licht eine Stromabgabe signalisiert werden, was natürlich auch die Fachbelegung beinhaltet, und durch ein rotes Licht ein Belegt-Zustand angezeigt werden, wenn die Stromabgabe bereits beendet ist. So erkennt der aktuelle Benutzer, ob sein Akku noch geladen wird, und ein anderer potentieller Benutzer, ob das Fach frei ist.

Bei der Ausführungsform nach Fig. 4 ist anstatt eines Chiplesesensors 7 ein Kartenleser 9 zum Einstecken einer Chipkarte vorgesehen.

Wie aus den Fig. 1 und 2 ersichtlich ist, die das Schließfach im geöffneten Zustand zeigen, kann auch im Inneren des Schließfachs am Technikblock 5 ein Chiplesesensor 7 oder ein Kartenleser 9 und eine optische Betriebsanzeige 8 vorgesehen sein. Stattdessen könnte am Technikblock 5 auch eine Starttaste (nicht dargestellt) vorgesehen sein, um nach Einlegen des Akkus oder des Geräts und Einstecken des Ladesteckers den Betriebsstart manuell auszulösen. Die komfortablere Lösung besteht allerdings darin, dass der Betriebsstart einfach durch Schließen der Schließfachtür 2 bei eingestecktem Ladestecker ausgelöst wird, was natürlich erfordert, dass ein Sensor vorhanden ist, der erkennt, ob ein Ladestecker in die Ladesteckdose 6 eingesteckt ist oder nicht.

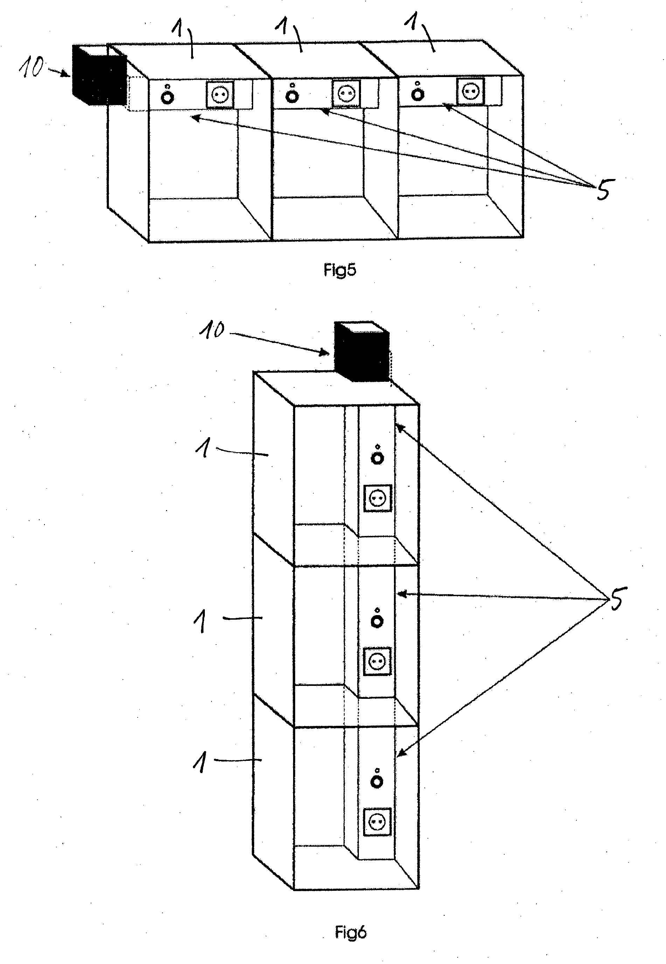

Die Fig. 5 und 6 zeigen jeweils drei Ladestationen-Module, wie sie in den Fig. 1 bis 4 dargestellt sind, die horizontal bzw. vertikal zu einem Modulblock zusammengefaßt sind. Natürlich kann ein Modulblock mehrere Reihen übereinander angeordneter Module umfassen, und diese Module können entweder einfach durch von außen nicht zugängliche Verbindungsmittel miteinander verbunden oder in einem gemeinsamen Gehäuse untergebracht sein. Dem Modulblock kann ein gemeinsames Steuergerät 10 zugeordnet sein, das die elektrische Betriebssteuerung aller Module des Modulblocks übernimmt.

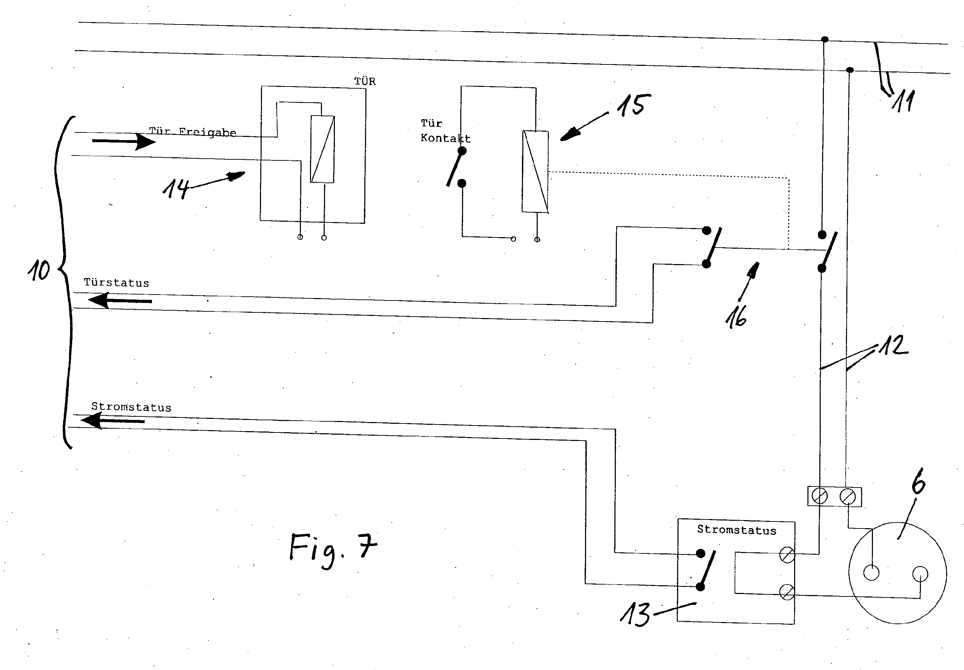

Fig. 7 zeigt ein schematisches Schaltbild einer möglichen Betriebssteuerung einer schließfachintegrierten Elektro-Ladestation bzw. jeder Ladestation eines Modulblocks aus mehreren Ladestationen.

Rechts unten im Schaltbild erkennt man die Ladesteckdose 6. Netzleitungen 11 sind über einen Stromkreis 12 mit der Ladesteckdose 6 verbunden. Der Stromkreis 12 zur Ladesteckdose 6 führt über einen Stromfühler 13, der erkennt, ob im Ladestromkreis 12 ein Strom fließt.

Die in Fig. 7 links endenden Leitungen führen zum Steuergerät 10.

In dem Schaltbild nach Fig. 7 zeigt der Schaltkreis 14 den Türfreigabekreis. Diese bewirkt das Öffnen der Tür bei entsprechender Authentifizierung durch den Benutzer. Ein Türkontaktkreis 15 erfaßt, ob die Tür geöffnet oder geschlossen ist und bewirkt bei geschlossener Tür die Betätigung eines Schalters 16, der den Ladestromkreis 12 schließt und damit einen Stromfluß durch die Ladesteckdose 6 ermöglicht, und der auch einen Türstatuskreis schließt und damit dem Steuergerät den Schließzustand der Tür meldet. Der Stromfühler 13 meldet den Stromstatus zum Steuergerät, also ob ein Ladestrom fließt oder nicht. Liegt der Stromfluß im Ladestromkreis 12 unterhalb einer bestimmten Minimalschwelle, bewirkt der Stromfühler 13 die Unterbrechung des Ladestromkreises 12, indem das Steuergerät 10 über den vom Stromfühler 13 gemeldeten negativen Stromstatus das Öffnen des Schalters 16 bewirkt.

Der Stromfühler 13 kann damit auch als Sensor zum Überprüfen dafür verwendet werden, ob ein Ladestecker eingesteckt ist oder nicht. Ist kein Ladestecker eingesteckt, kann auch beim Schließen des Schalters 16 aufgrund eines vom Türkontaktkreis 15 gemeldeten Schließzustands der Tür kein Strom im Ladestromkreis 12 fließen, so dass der Stromfühler 13 sofort wieder das Öffnen des Schalters 16 bewirkt. Damit kann der Betrieb der Ladestation so gesteuert werden, dass der Ladebetrieb automatisch beim Schließen der Schließfachtür 2 gestartet wird, ohne dass der Benutzer, der die Schließfachtür mittels Authentifizierung geöffnet hat, außer dem bloßen Schließen der Tür noch irgendetwas tun muß, um den Ladevorgang zu starten.

Hat ein Benutzer das Fach 1 durch Öffnen der Tür 2 mittels seiner Authentifizierung in Benutzung genommen, sorgt die Steuerung dafür, daß ein nachfolgendes Öffnen der Tür nur durch dieselbe Authentifizierung möglich ist.

## Patentansprüche

1. Elektro-Lade- oder Stromentnahmestation, mit einer Lade- oder Stromentnahmesteckdose (6) zum Einstecken des Steckers eines Lade- oder Stromentnahmekabels,
**dadurch gekennzeichnet, dass** die Steckdose (6) innerhalb eines Schließfachs (1) mit einer Schließfachtür (2) angeordnet ist, die eine elektrisch gesteuerte Verriegelung (3) aufweist und von einem Benutzer mittels einer Authentifizierung geöffnet werden kann, die mittels eines dem Schließfach (1) zugeordneten, am Schließfach oder an dessen Tür angeordneten Lese- oder Erfassungsgerät (7, 9, 10) erfaßbar ist, und wobei die Stromabgabe nach Einstecken des Steckers in die Steckdose (6) manuell oder automatisch auslösbar ist.

2. Station nach Anspruch 1, wobei zum Erfassen der Benutzerauthentifizierung ein in der Schließfachtür (2) oder neben dieser am Schließfach (1) eingebauter Chipleser (7) oder Chipkartenleser (9) oder sonstiges Lesegerät dient, oder ein Empfangsgerät zum Empfangen von Handysignalen oder anderen Funksignalen am Schließfach dient.

3. Station nach Anspruch 1 oder 2, wobei im Inneren des Schließfachs (1) ein weiterer Chipleser (7) oder Chipkartenleser (9) oder sonstiges Lesegerät angeordnet ist.

4. Station nach einem der Ansprüche 1 bis 3, wobei im Inneren des Schließfachs (1) eine Starttaste zum Auslösen des Stromabgabevorgangs angeordnet ist.

5. Station nach einem der Ansprüche 1 bis 4, wobei die Schließfachtür (2) vorzugsweise an ihrem unteren Rand eine kleine Aussparung aufweist, um die Durchführung eines Kabels auch bei geschlossener Schließfachtür (2) zu ermöglichen.

6. Station nach einem der Ansprüche 1 bis 5, wobei die Stromabgabe bei in die Steckdose (6) eingestecktem Stecker durch Schließen der Schließfachtür (2) ausgelöst wird.

7. Station nach einem der Ansprüche 1 bis 6, wobei in den Steckdosenstromkreis der Steckdose (6) ein Stromfühler (13) geschaltet ist, die den Stromfluß mißt und beim Fehlen eines solchen oder beim Unterschreiten eines minimalen Schwellenwerts den Steckdosenstromkreis unterbricht.

8. Station nach einem der Ansprüche 1 bis 7,wobei mindestens außen an der Schließfachtür (2) oder neben derselben am Schließfach eine Betriebszustandsanzeige (8) vorgesehen ist, die anzeigt, ob ein Abgabestrom fließt und/oder welche die Belegung des Schließfachs anzeigt.

9. Station nach einem der Ansprüche 1 bis 8, wobei ein dem Schließfach (1) zugeordnetes Steuergerät (10) die Stromentnahmemenge und/oder die Belegungsdauer des Schließfachs erfaßt und der empfangenen Authentifizierung zuordnet oder dieser zugeordnet abrechnet.

10. Stationenblock mit einer Mehrzahl neben und/oder übereinander angeordneter Stationen nach einem der Ansprüche 1 bis 9 und mit einem allen Stationen gemeinsam zugeordneten Steuergerät (10).
